# EUROPEAN PATENT SPECIFICATION

(11) **EP 0 274 171 B1**
(45) Date of publication and mention of the grant of the patent: **16.03.1994**
(21) Application number: 87300147.3
(22) Date of filing: 08.01.1987
(51) Int. Cl.: A01N 59/02, A01N 47/28

(54) **Pesticidal compositions and methods for controlling pests**
Pestizide Zusammensetzungen
Compositions pesticides

(43) Date of publication of application: 13.07.1988
(73) Proprietor: UNION OIL COMPANY OF CALIFORNIA, Los Angeles, CA 90017 (US)
(72) Inventor: Young, Donald C., California 92635 (US)
(74) Representative: Jack, Bruce James

(56) References cited:
- US-A- 4 310 343
- US-A- 4 445 925
- US-A- 4 522 644
- JOURNAL OF AGRICULTURAL AND FOOD CHEMISTRY, vol. 24, no. 6, November/December 1976, pages 1180-1186, Washington, DC, US; A.E. SMITH et al.: "A compendium of inorganic substances used in European pest control before 1850"

## Description

This invention relates to pest control, and, in particular, it relates to compositions and methods useful for controlling pests, especially plant pests.

A variety of plant pests are known to inflict significant damage to ornamental and crop plants and to periodically invade and thereby inconvenience residences and other structures and locations. Such pests typically include insects, gastropods, arachnids, worms, fungi, and plant pathogens such as viruses and bacteria. Such pests are generally controlled, if at all, with a variety of pesticides most of which are expensive, complex chemical compositions which are toxic to humans and/or the environment and which persist long after they are applied. Crop rotation is effective for controlling, although not eliminating, pests in several seasonal crops such as grasses, vegetables and grains and is much less damaging than is the use of chemical pesticides. However, crop rotation serves only to reduce rather than to eliminate pest populations and, of course, cannot be employed in perennial crops. Obviously, such methods of pest control suffer from numerous disadvantages, including the expense of the compositions or procedures (crop rotation) involved, threats to the environment which are presented by persistent chemical pesticides, and hazards to humans involved in the manufacture, transportation and application of such pesticides and to consumers of produce from pesticide-treated crops.

Sulfuric acid is known to be effective for controlling pests, and it kills essentially all pests upon contact. However, sulfuric acid is seldom used for such purposes because of its corrosivity and reactivity with almost every material which it contacts including human skin, clothing, and essentially all substrates to which it would be applied for pest control. Furthermore, sulfuric acid rapidly reacts by oxidation, dehydration, and/or sulfonation with proteinaceous matter and other matter of pest anatomy and with substrates such as wood bark, dormant grasses, etc, to which it might be applied to control pests, and it is consumed by such reactions. US-A-4 116 664 (Jones) and US-A-4 310 343 (Verdegaal) disclose that this chemical reactivity of sulfuric acid can be attenuated by reacting it with urea to form a variety of urea-sulfuric acid formulations which are useful as liquid fertilizers. Jones teaches that the resulting urea-sulfuric acid combinations are nontoxic, noncaustic, and noncorrosive to black iron and, accordingly, can be safely transported, handled, stored, and applied by ordinary farm workers and ordinary application equipment because of the absence of the chemical reactivity which is characteristic of sulfuric acid per se.

US-A-4 522 644 describes methods for controlling parasitic plant suckers from desired vegetation, e.g. grapes, etc., by selectively applying to the plant suckers a herbicidally effective amount of the monourea adduct of sulfuric acid. In the preferred compositions, the molar ratio of urea to sulfuric acid is within the range of 1/4 to 7/4 so that at least 25 percent of the sulfuric acid is present as the monourea adduct. Surfactants further accentuate the herbicidal activity of the compositions, and the remainder of the desired plant is not harmed due to selective application of the adduct only to the foliage of the plant suckers.

We have now found that a variety of pests can be controlled by applying to a location occupied or traversed by such pests a composition comprising an amount of the monourea adduct of sulfuric acid sufficient to control the pests. Without being constrained to any particular theory of this invention, it is presently believed that urea-sulfuric acid compositions in which the urea/H₂SO₄ molar ratio is below 2 contain, and/or will generate, the monourea adduct of sulfuric acid, and that this adduct, rather than the diurea adduct of sulfuric acid, which forms at urea/H₂SO₄ molar ratios of 2 and above, retains the substantial protonating activity of sulfuric acid and therefore is pathogenic to life forms and to a variety of pests in particular. Compositions which comprise a combination of a hydrocarbon oil, urea, and sulfuric acid in which the urea/H₂SO₄ molar ratio is below 2 and therefore contain the monourea adduct are particularly useful for controlling pests and for eliminating the deleterious effects that such pests otherwise have in various environments, including their negative effects on ornamental and crop plants.

This invention accordingly provides compositions and methods useful for controlling pests, as defined in the claims hereof.

The compositions and methods of this invention have a number of advantages over known compositions and methods for controlling pests. The useful compositions are less expensive than most, if not all, effective pesticides. They are effective on contact and are nontoxic to the environment and to plants and therefore can be repeatedly applied as required. In fact, the useful compositions are beneficial both to the environment and to plants since they are converted to useful fertilizers and soil adjuvants. They are nonpersistent in the sense that they do not remain toxic even to controlled pests for prolonged periods of time, yet they are sufficiently persistent to afford adequate control of the desired pests. Depending on the manner of application, the useful compositions can remain effective against pests for 2 to 4 weeks or more in some circumstances unless removed from the area to which they are applied by washing or are deactivated by neutralization; and the useful compositions are readily and inexpensively deactivated by neutralization with readily available bases such as ammonia, ammonium hydroxide, sodium hydroxide, etc. They are less hazardous to surfaces and plants to which they are applied than is sulfuric acid, and they also are less hazardous to applicators and less detrimental to application equipment than is sulfuric acid. Yet the useful compositions are more stable than sulfuric acid and therefore maintain their pesticidal activity for a longer period of time since they do not react with most substances to which they are applied by oxidation, dehydration, and sulfonation as does sulfuric acid.

The pests which can be controlled by the methods and compositions of this invention include a wide variety of species which typically are detrimental to plants and/or which often invade residences or other structures. Treatable pests include mobile and immobile pests such as flying, windblown, and crawling insects and other pests including viruses and bacteria which are carried by other vectors such as insects and windblown soil or plant matter. Controllable pests include insects, gastropods, arachnids, worms, fungi, viruses, and bacteria. Illustrative insects include so-called sucking bugs such as members of the genus Lygus, homopterous insects such as aphids and scale, hoppers such as tree, leaf, and grasshoppers, insects of the order Coleopetera including beetles and weevils, insects of the order Dermoptera including earwigs, ants, thrips, crickets, and numerous others. Illustrative gastropods include pulmonate gastropods such as slugs and gastropod molluscs including all varieties of snails. Typical worm pests include the larvae of moths and other insects (including caterpillars), grubs, web worms, canker worms, etc. Typical arachnids include detrimental spiders and mites such as spider mites, brown mites, rust mites, etc., which are known to be principal carriers of disease vectors (pathogens) between plants and/or between the plants and soil. Pathogens which can be controlled by the methods and compositions of this invention include viruses which are exposed on the surface of the soil or other treated surfaces or on the woody parts of plants, or which are carried by mobile disease vectors such as the arachnids, sucking bugs, and other pest forms referred to above. Other controllable pathogens include bacteria, particularly the rhizobia bacteria which exist principally in the root zones of plants near the surface, particularly in the root zones of grass crops, and fungi including saprophytic and parasitic lower plants such as molds, rusts, mildews, smuts, and the like.

The compositions which are useful in this invention contain the monourea adduct of sulfuric acid. These compositions may optionally contain water, and it is the combination of water with the adduct which is believed to constitute the effective pesticidal agent. Without being constrained to any particular theory of this invention, it is believed that the monourea adduct of sulfuric acid is the most effective and persistent pesticidal component of these compositions. The monourea adduct exists only in urea-sulfuric acid components which have urea/H₂SO₄ molar ratios below 2. It is desirable to minimize the deleterious effects associated with the presence of free (unadducted) sulfuric acid in the urea-sulfuric acid component. Taking these factors into consideration, the useful compositions usually have urea/H₂SO₄ molar ratios within the range of about 1/4 to less than 2, generally about 1/4 to about 7/4, and preferably at least about 1/2, the latter of which assures that at least 50 percent of the sulfuric acid will be present as adducted sulfuric acid. The deleterious effects of free sulfuric acid can be minimized or eliminated altogether by employing compositions in which the urea/H₂SO₄ molar ratio is at least about 1. Thus it is sometimes preferable to employ compositions which have urea/H₂SO₄ molar ratios within the range of about 1 to less than 2.

The concentration of the monourea adduct in the pesticidal compositions useful in this invention should be sufficient to control the treated pests and/or to inhibit the detrimental activity of such pests either toward plants or otherwise. Very low concentrations of the useful adduct are sufficient to achieve at least some degree of control and/or inhibition of treated pests. Furthermore, the adduct can be applied in very dilute form, e.g. an aqueous solution, from which the water or other solvent evaporates, thereby increasing the effective concentration of the adduct on the treated substrate. Typically, the adduct will constitute at least about 0.5 and generally at least about 5 weight percent of the useful compositions. Compositions which contain higher proportions of the adduct are even more effective for immediate pest control. Thus, the adduct concentration can vary considerably, and the adduct can, in combination, constitute about 1 to about 90 weight percent, most often 1 to about 50 weight percent of the composition as applied. Generally speaking, increasing the adduct concentration increases effectiveness.

Particularly useful compositions for immediate control of contacted pests are aqueous solutions of the monourea adduct in which the H₂O/adduct molar ratio is less than about 2.5. In such compositions the adduct will constitute at least about 60 weight percent of the composition based on the combined weight of adduct and water.

The useful compositions can contain any one or more of a variety of other materials which do not inhibit or negate the pesticidal activity of the monourea adduct to an unacceptable extent. Illustrative of such additional components are nutrients such as potassium, phosphorus, and micro-nutrients (magnesium, copper, etc.) which can be present as oxides or other compounds such as potassium hydroxide, phosphoric acid, ammonium phosphate, etc.

The novel compositions of this invention are combinations of the described monourea adduct of sulfuric acid with a hydrocarbon oil which, at the temperature at which it is applied, has a viscosity which is sufficiently low to allow adequate distribution as by spraying. These compositions usually involve emulsions of the oil and an aqueous adduct component in which either the water phase or the hydrocarbon phase can constitute the discontinuous phase. The hydrocarbon oil increases the pesticidal effectiveness and persistence of the adduct, particularly for the treatment of pests and/or surfaces which are not readily wet by water. The hydrocarbon-containing components are also useful for treating areas which are exposed to water which might otherwise rapidly wash the pesticidal adduct component from the treated pest or surface.

Typically, the useful hydrocarbon oils will have melting points below about 10^{o}C and usually constitute petroleum oils. The hydrocarbon oil can be either pesticidal, e.g., herbicidal and/or insecticidal, or not. Therefore, both aromatic and non-aromatic, sulfonated and unsulfonated hydrocarbon oils can be employed. Paraffinic (non-aromatic) spray oils are preferred for the treatment of areas or plants when it is preferable to avoid herbicidal effects or persistent pesticidal effects associated with other spray oils such as the sulfonated and highly aromatic spray oils. Paraffinic spray oils are generally characterized as those which contain less than 7 volume percent aromatics, and they typically have viscosities within the range of about 60 to about 150 Saybolt seconds.

The novel hydrocarbon-containing monourea adduct compositions typically contain from about 2 to about 60, preferably from about 10 to about 60, and most preferably from about 20 to about 40 weight percent of the adduct expressed as the weight of the adduct and based on the total weight of the composition. The hydrocarbon oil typically constitutes at least about 10 weight percent, and generally at least about 30 weight percent of the composition. However, the oil content can vary considerably since very minor oil concentrations, e.g., about 5 weight percent, are adequate to produce some beneficial effect. Higher oil concentrations afford greater persistence and effectiveness, particularly when applied to water repellent pests and/or treated surfaces. Thus, the oil concentration will usually be within the range of from about 10 to about 98 weight percent, generally from about 40 to about 90 weight percent based on the total weight of the composition.

The water concentration of the novel compositions need only be sufficient to act as an adequate carrier for the adduct component. Thus, due to the high solubility of the adduct in water, very minor water concentration can be employed when the concentration of the adduct is relatively low. Accordingly, the water content of the novel compositions can be as low as about 1 weight percent but is preferably at least about 5 weight percent of the total composition. However, much higher water concentrations also can be employed. Thus, water concentration is typically within the range of from about 5 to about 80, generally from about 10 to about 50 weight percent, based on the combined weight of adduct and water.

In addition to influencing the maximum adduct concentration that can be carried by the novel pesticidal compositions, water concentration also influences the stability of the water-hydrocarbon emulsion. For instance, when the hydrocarbon phase is the continuous phase of the emulsion (which is preferable for immediate wetting of the hydrophobic pests or substrates) the water concentration is preferably below about 20 weight percent based on the total weight of the composition. When the water concentration is increased, e.g., to about 50 percent or more of the total composition, the water-in-oil emulsions (if used as a starting material) will invert to oil-in-water emulsions which can be stabilized by the addition of typical surfactants, e.c., emulsifiers, stabilizers, etc.

In addition to stabilizing the novel oil-in-water emulsions, surfactants also aid in the control of pests located on woody plant parts. However, surfactants are generally not preferred for the treatment of sensitive plant parts, especially foliage, since they accentuate the herbicidal activity of the adduct as described in copending European Applications 86105942.6 and 86111365.2 (EP-A-0 243 522 and EP-A-0 216 126).

The novel hydrocarbon-containing pesticidal compositions of this invention can be readily prepared by mixing the hydrocarbon oil, monourea adduct and water and subjecting the combination to high shear mixing. For instance, either the oil-in-water or water-in-oil emulsions can be readily prepared in a Waring blender. Of course, larger commercial scale equipment is generally preferred for the manufacture of commercial quantities.

The monourea adduct of sulfuric acid can be prepared by any procedure capable of forming the described combinations of urea and sulfuric acid. Particularly preferred methods are discussed in US-A-4 397 675 and US-A-4 445 925. The methods disclosed in these U.S. Patents are particularly useful for the preparation of adducts which are free of decomposition products of urea, sulfuric acid, and/or of the mono/or diurea adducts such as ammonium sulfate, sulfamic acid, and ammonium sulfamate which can result from the use of other manufacturing procedures. Useful noncorrosive adduct formulations which are preferable for use in transportation, mixing and/or application equipment which is subject to corrosion, are described in US-A-4 402 852 and US-A-4 404 116.

The methods and compositions of this invention can be employed to control pests by application of the useful compositions to plants, soils (particularly in the vicinity of plants), sidewalks, residences, and/or other structures or sites. They are particularly useful for the control of pests located on or which traverse the woody portions of plants such as deciduous and coniferous, fruiting, timber, and/or ornamental trees, vines, and bushes, including almond trees, citrus, pines, junipers, grapes and other berry vines, and the like. These methods and compositions are also useful for the control of pests in dormant grasses such as alfalfa and grass seed crops such as rye, fescue, bermuda, blue grass and the like by the application of the useful urea-sulfuric acid components to such dormant crops. They also can be employed to control pests on the foliage of resistant zerophytic plants such as onions, garlic, broccoli, and other zerophytic species, the foliage of which is resistant to the herbicidal effect of the adduct component (in the absence of surfactants).

Pests located on or which traverse the soil surface, particularly in the vicinity of plants, also can be controlled by the novel methods and compositions of this invention. However, the application of the useful monourea adduct directly to soil may result only in the control of pests which are immediately contacted with the active component. The adduct persists much longer on organic matter on the soil surface such as the duff which usually exists in the immediate vicinity of ornamental and crop plants such as on orchard floors, vinyards, and in dormant grass crops. Thus, the adduct provides residual control of pests located in or which traverse such organic matter.

In accordance with the methods of this invention, pests are controlled by applying a pesticidally effective amount of the described monourea adduct to the location of and/or to the path traversed by the pests. The amount of the adduct applied should be sufficient to at least inhibit the detrimental activity of the controlled pest. Dosage rates usually correspond to at least about 45kg/ha, generally about 90 to about 900kg/ha (40 pounds per acre, generally about 80 to about 800 pounds per treated acre) (based on the weight of adduct) when topical application is employed. When it is desired to control pests located on or which traverse the woody portions of plants or the duff at the plant's base, the adduct should be applied at a rate sufficient to at least partially wet the treated surface.

Application timing should be correlated with the presence and/or migratory behaviour of the controlled pests. Contact control of active and dormant pests located on the treated site can be effected by the application of the monourea adduct to the pests in the treated location. Pests which migrate either daily or annually can also be controlled by these methods. Thus, nocturnal ground-dwelling pests, such as cut-worms, can be controlled by applying to the base or woody stalk or trunk of the affected plants a pesticidally effective amount of the adduct. The soil dwelling pests will either avoid migrating through the treated area or will be inhibited or killed upon contact with the adduct.

Since the monourea adduct has 2 to 4 weeks residual control, particularly when applied to the woody parts of plants (if not washed off or neutralized), one application is often adequate to control treated pests due to the relatively short life cycle of many pest varieties. However, pests which are more persistent, either due to longer life cycles or otherwise can be controlled by repeated applications of the adduct. Annually migrating pests which winter in the organic material, i.e., duff, at the base of plants can be controlled by applying the adduct to the surface of the organic material at the plant's base and/or to the woody portion of the plant immediately prior to or during the pest migration. The best control is usually achieved in early spring when surface warming initiates pest reemergence from the soil and migration to the plant.

The invention is further described by the following examples which are illustrative of specific modes of practicing the invention and are not intended as limiting the scope of the invention.

### EXAMPLE 1

The trunks of almond trees which are normally infested with mites during the spring and summer are sprayed from ground level up to a height of a few metres (several feet) with a sufficient amount of a composition containing 36.4 weight percent urea, 52.1 weight percent sulfuric acid and 11.5 weight percent water to dampen the tree bark. The composition has a urea/H₂SO₄ molar ratio of 1.1. The application is made in early spring at the first warming and shortly before the reemergence of mites which winter in the soil. Following mite reemergence and the mite infestation of untreated trees in the same population, the treated almond trees are found to be free of mite infestations.

### EXAMPLE 2

The trunks-of citrus trees are treated with the composition described in Example 1 by applying a sufficient quantity of the composition to wet the trunk bark from approximately ground level to a height of a few metres (several feet). The urea-sulfuric acid component is applied shortly before mite reemergence in the early spring. The treated citrus trees remain free of mite infestation. In contrast, untreated trees in the same population evidence mite infestations.

### EXAMPLE 3

The woody lower vine portions of trellised grape plants are sprayed with a sufficient quantity of the composition described in Example 1 to wet the bark from soil level to a height of approximately 60cm (2 feet). The spray is applied immediately prior to mite reemergence from the soil in early spring. The treated plants show no signs of mite infestations, while untreated grape plants in the same population are infested with mites.

### EXAMPLE 4

Scale on the limbs of dormant walnut trees is killed by spraying the infested stems with a sufficient quantity of the composition described in Example 1 to wet the stem bark. The scale infestation dies immediately as indicated by a marked colour change to a bleached skeleton after which the scale falls from the affected plant portions. All evidence of scale infestation is gone within 24 hours.

## Claims

1. A composition having activity for controlling pests selected from insects, gastropods, arachnids, worms, fungi, viruses, bacteria, and combinations thereof, comprising a hydrocarbon oil and an amount of the monourea adduct of sulfuric acid sufficient to control said pests.

2. A composition according to claim 1 free of unadducted sulfuric acid.

3. A composition according to any preceding claim, wherein said hydrocarbon oil has a melting point not higher than 10° C.

4. A composition according to any preceding claim, wherein said hydrocarbon oil is a paraffinic petroleum oil.

5. A composition according to any preceding claim, wherein said hydrocarbon oil constitutes at least 30 weight percent of the composition.

6. A composition according to any preceding claim, comprising at least 5 weight percent water based on the combined weight of said monoadduct and water.

7. A composition according to any preceding claim, comprising not more than 80 weight percent water based on the combined weight of said adduct and water.

8. A composition according to any preceding claim, comprising water constituting from 10 to 50 percent of the combined weight of said monoadduct and water.

9. A composition according to any preceding claim, wherein the concentration of said monourea adduct is at least 2 weight percent of the composition.

10. A composition according to any preceding claim, wherein said monourea adduct constitutes at least 10 weight percent of the composition.

11. A composition according to any preceding claim, wherein said monourea adduct constitutes not more than 60 weight percent of the composition.

12. A composition according to any preceding claim, comprising a water-hydrocarbon oil emulsion.

13. A composition according to claim 12, in which the oil is the continuous phase of said emulsion.

14. A composition according to claim 12 or 13, essentially free of surfactant.

15. A composition according to claim 12, in which the oil is the discontinuous phase of said emulsion, and the composition contains a surfactant.

16. A method for controlling pests selected from insects, gastropods, arachnids, worms, fungi, viruses, bacteria, and combinations thereof, characterized by applying to the location occupied or traversed by said pests a composition comprising an amount of the monourea adduct of sulfuric acid sufficient to control said pests.

17. A method for controlling pests selected from insects, gastropods, arachnids, worms, fungi, viruses, bacteria, and combinations thereof, characterized by applying to a location occupied or traversed by said pests a composition comprising a hydrocarbon oil, water, and an amount of the monourea adduct of sulfuric acid sufficient to control said pests.

18. A method for controlling pests selected from insects, gastropods, arachnids, worms, fungi, viruses, bacteria, and combinations thereof, characterized by applying to a location occupied or traversed by said pests a composition having pesticidal activity and in accordance with any one of claims 1-15.

19. A method according to any one of claims 16 to 18, in which said composition is applied to the soil surface in the vicinity of plants to be protected from pests.

20. A method according to any one of claims 16 to 18, for controlling plant pests on plants which have exposed woody portions, in which said composition is applied to the woody portions of said plants.

21. A method according to any one of claims 16 to 18, in which said composition is applied to a member selected from dormant trees, vines, bushes, grasses and combinations thereof.

## Patentansprüche

1. Eine Zusammensetzung mit Wirksamkeit bei der Bekämpfung von Schädlingen, ausgewählt aus Insekten, Gastropoden, Arachniden, Würmern, Pilzen, Viren, Bakterien und Kombinationen davon, die ein Kohlenwasserstofföl und das Monoharnstoffaddukt der Schwefelsäure in einer zur Bekämpfung besagter Schädlinge ausreichenden Menge enthält.

2. Eine Zusammensetzung nach Anspruch 1, frei von nicht umgesetzter Schwefelsäure.

3. Eine Zusammensetzung nach einem beliebigen vorhergehenden Anspruch, worin besagtes Kohlenwasserstofföl einen Schmelzpunkt von nicht höher als 10°C hat.

4. Eine Zusammensetzung nach einem beliebigen vorhergehenden Anspruch, worin besagtes Kohlenwasserstofföl ein paraffinisches Öl auf Erdölbasis ist.

5. Eine Zusammensetzung nach einem beliebigen vorhergehenden Anspruch, worin besagtes Kohlenwasserstofföl mindestens 30 Gewichtsprozent der Zusammensetzung ausmacht.

6. Eine Zusammensetzung nach einem beliebigen vorhergehenden Anspruch, die mindestens 5 Gewichtsprozent Wasser enthält, bezogen auf das Gewicht besagten Monoaddukts und Wassers zusammen.

7. Eine Zusammensetzung nach einem beliebigen vorhergehenden Anspruch, die nicht mehr als 80 Gewichtsprozent Wasser enthält, bezogen auf das Gewicht besagten Addukts und Wassers zusammen.

8. Eine Zusammensetzung nach einem beliebigen vorhergehenden Anspruch, die Wasser enthält, das von 10 bis 50 Prozent des Gewichts besagten Monoadduktes und Wassers zusammen ausmacht.

9. Eine Zusammensetzung nach einem beliebigen vorhergehenden Anspruch, worin die Konzentration besagten Monoharnstoffaddukts mindestens zwei Gewichtsprozent der Zusammensetzung beträgt.

10. Eine Zusammensetzung nach einem beliebigen vorhergehenden Anspruch, worin besagtes Monoharnstoffaddukt mindestens 10 Gewichtsprozent der Zusammensetzung ausmacht.

11. Eine Zusammensetzung nach einem beliebigen vorhergehenden Anspruch, worin besagtes Monoharnstoffaddukt nicht mehr als 60 Gewichtsprozent der Zusammensetzung ausmacht.

12. Eine Zusammensetzung nach einem beliebigen vorhergehenden Anspruch, die aus einer Wasser-Kohlenwasserstofföl-Emulsion besteht.

13. Eine Zusammensetzung nach Anspruch 12, in der das Öl die zusammenhängende Phase besagter Emulsion ist.

14. Eine Zusammensetzung nach Anspruch 12 oder 13, die im wesentlichen frei von oberflächenaktiven Substanzen ist.

15. Eine Zusammensetzung nach Anspruch 12, in der das Öl die disperse Phase besagter Emulsion ist und in der die Zusammensetzung eine oberflächenaktive Substanz enthält.

16. Eine Methode zur Bekämpfung von Schädlingen, ausgewählt aus Insekten, Gastropoden, Arachniden, Würmern, Pilzen, Viren, Bakterien und Kombinationen davon, dadurch charakterisiert, daß auf den von besagten Schädlingen befallenen oder durchseuchten Ort eine Zusammensetzung aufgebracht wird, die eine zur Bekämpfung besagter Schädlinge ausreichende Menge des Monoharnstoffaddukts der Schwefelsäure enthält.

17. Eine Methode zur Bekämpfung von Schädlingen, ausgewählt aus Insekten, Gastropoden, Arachniden, Würmern, Pilzen, Viren, Bakterien und Kombinationen davon, dadurch charakterisiert, daß auf einen von besagten Schädlingen befallenen oder durchseuchten Ort eine Zusammensetzung aufgebracht wird, die aus einem Kohlenwasserstofföl, Wasser und einer zur Bekämpfung besagter Schädlinge ausreichende Menge des Monoharnstoffaddukts der Schwefelsäure besteht.

18. Eine Methode zur Bekämpfung von Schädlingen, ausgewählt aus Insekten, Gastropoden, Arachniden, Würmern, Viren, Bakterien und Kombinationen daraus, dadurch charakterisiert, daß auf einen von besagten Schädlingen befallenen oder durchseuchten Ort eine Zusammensetzung aufgebracht wird mit Pestizidwirkung und gemäß eines beliebigen der Ansprüche 1-15.

19. Eine Methode nach einem beliebigen der Ansprüche 16 bis 18, in dem besagte Zusammensetzung auf die Erdoberfläche in der Nähe von Pflanzen aufgebracht wird, die vor Schädlingen geschützt werden sollen.

20. Eine Methode nach einem beliebigen der Ansprüche 16 bis 18 zur Bekämpfung von Pflanzenschädlingen auf Pflanzen, die ausgesetzte Holzteile besitzen, bei der besagte Zusammensetzung auf die Holzteile besagter Pflanzen aufgebracht wird.

21. Eine Methode nach einem beliebigen der Ansprüche 16 bis 18, bei der besagte Zusammensetzung auf eine der folgenden Pflanzen aufgebracht wird, ausgewählt aus Bäumen, Weinreben, Büschen, Gräsern während der Winterzeit und Kombinationen davon.

## Revendications

1. Une composition présentant une activité pour le contrôle des agents nuisibles sélectionnés parmi: insectes, gastéropodes, arachnides, vers, champignons, virus, bactéries et leurs combinaisons, comprenant une huile hydrocarbonée et une quantité d'un produit de monoaddition d'urée de l'acide sulfurique suffisante pour contrôler ces agents nuisibles.

2. Une Composition selon la revendication 1, exempte d'acide sulfurique non modifié.

3. Une composition selon l'une quelconque des revendications précédentes, dans laquelle ladite huile hydrocarbonée présente un point de fusion inférieur à 10°C.

4. Une composition selon l'une quelconque des revendications précédentes, dans laquelle ladite huile hydrocarbonée est une huile de pétrole paraffinique.

5. Une composition selon l'une quelconque des revendications précédentes, dans laquelle ladite huile hydrocarbonée constitue au moins 30% en poids de la composition.

6. Une composition selon l'une quelconque des revendications précédentes, comprenant au moins 5% en poids d'eau, sur la base du poids combiné dudit produit de monoaddition et de l'eau.

7. Une composition selon l'une quelconque des revendications précédentes, ne comprenant pas plus de 80 % en poids d'eau, sur la base du poids combiné dudit produit d'addition et de l'eau.

8. Une composition selon l'une quelconque des revendications précédentes, comprenant de l'eau constituant de 10 à 50% en poids, par rapport au poids combiné dudit produit de monoaddition et de l'eau.

9. Une composition selon l'une quelconque des revendications précédentes, dans laquelle la concentration dudit produit de monoaddition d'urée représente au moins 2% en poids de la composition.

10. Une composition selon l'une quelconque des revendications précédentes, dans laquelle ledit produit de monoaddition d'urée constitue au moins 10% en poids de la composition.

11. Une composition selon l'une quelconque des revendications précédentes, dans laquelle ledit produit de monoaddition d'urée ne constitue pas plus de 60% poids de la composition.

12. Une composition selon l'une quelconque des revendications précédentes, comprenant une émulsion eau/huile hydrocarbonée.

13. Une composition selon la revendication 12, dans laquelle l'huile est la phase continue de ladite émulsion.

14. Une composition selon la revendication 12 ou 13, essentiellement exempte de tensioactif.

15. Une composition selon la revendication 12, dans laquelle l'huile est la phase discontinue de ladite émulsion, et la composition contient un tensioactif.

16. Un procédé pour contrôler les agents nuisibles sélectionnés parmi: insectes, gastéropodes, arachnides, vers, champignons, virus, bactéries et leurs combinaisons, caractérisé en ce que l'on applique sur la région traversée par lesdits agents nuisibles une composition contenant une quantité de produit de monoaddition d'urée d'acide sulfurique, suffisante pour contrôler lesdits agents nuisibles.

17. Un procédé pour contrôler les agents nuisibles sélectionnés parmi: insectes, gastéropodes, arachnides, vers, champignons, virus, bactéries et leurs combinaisons, caractérisé en ce que l'on applique sur la région occupée ou traversée par lesdits agents nuisibles une composition comprenant une huile hydrocarbonée, de l'eau, et une quantité de produit de monoaddition d'urée d'acide sulfurique suffisante pour contrôler lesdits agents nuisibles.

18. Un procédé pour contrôler les agents nuisibles sélectionnés parmi: insectes, gastéropodes, arachnides, vers, champignons, virus, bactéries et leurs combinaisons, caractérisée en ce que l'on applique sur la région occupée ou traversée par lesdits agents nuisibles une composition ayant une activité pesticide selon l'une quelconque des revendications 1 à 15.

19. Un procédé selon l'une quelconque des revendications 16 à 18, dans lequel ladite composition est appliquée à la surface du sol ou à proximité des plantes à protéger des agents nuisibles.

20. Un procédé selon l'une quelconque des revendications 16 à 18, pour le contrôle des agents nuisibles des plantes qui ont des parties en bois exposées, sur lesquelles ladite composition est appliquée aux parties en bois desdites plantes.

21. Un procédé selon l'une quelconque des revendications 16 à 18, dans lequel ladite composition est appliquée à un végétal choisi parmi les herbes, les buissons, les vignes, les arbres en état de dormance et leurs combinaisons.
